Europäisches Patentamt

European Patent Office

Office européen des brevets

(11) Publication number: **0 152 482**
**B1**

(12) **EUROPEAN PATENT SPECIFICATION**

(45) Date of publication of patent specification: **15.03.89**

(51) Int. Cl.⁴: **G 01 S 3/02**

(21) Application number: **84903576.1**

(22) Date of filing: **19.07.84**

(86) International application number:
**PCT/US84/01135**

(87) International publication number:
**WO 85/00895 28.02.85 Gazette 85/05**

(54) DIRECTION FINDING INTERFEROMETER INTERNAL CALIBRATION SYSTEM.

(30) Priority: **18.08.83 US 524274**

(43) Date of publication of application:
**28.08.85 Bulletin 85/35**

(45) Publication of the grant of the patent:
**15.03.89 Bulletin 89/11**

(84) Designated Contracting States:
**DE FR GB**

(56) References cited:
**DE-B-2 553 867**
**FR-A-2 220 111**

**Electrical Communication, vol. 49, no. 3, 1974 (NEW YORK, US). M. Nollet et al.: "Advanced VHF interferometer spacecraft tracking system", pages 204-217, see figures 1, 2, 10, 11; page 204: "Introduction", pages 208-211: "Receiver system"**

(73) Proprietor: **Hughes Aircraft Company**
**7200 Hughes Terrace P.O. Box 45066**
**Los Angeles California 90045-0066 (US)**

(72) Inventor: **GRAVES, Ross, E.**
**La Tierra, Lot 50 Box 1086 Buckman Road**
**Santa Fe, NM 87501 (US)**

(74) Representative: **Colgan, Stephen James et al**
**CARPMAELS & RANSFORD 43 Bloomsbury Square**
**London WC1A 2RA. (GB)**

Courier Press, Leamington Spa, England.

# Description

## Technical field

This invention relates to direction finding interferometers and, more particularly, to calibration systems for such interferometers.

## Background of the invention

### 1. Field of the invention

A direction finding interferometer determines direction by ascertaining phase differences in signals received by multiple antennas. Frequent recalibration of such devices is necessary because the transmission characteristics of the various transmission lines and components can vary due to, for example, thermal effects and equipment aging. Recalibration determines the phase differences between the receiver channels following the antenna elements.

Recalibration is especially problematic in long-baseline interferometers, in which the antenna elements are spaced ar apart. In such an interferometer it is not feasible to control precisely the electrical lengths of the transmission lines that are necessary for recalibration of the interferometer. What is needed is a recalibration system which permits frequent recalibration and is independent of transmission line length.

### 2. Description of the prior art

In general, recalibration systems for direction finding interferometers in the prior art require external calibration means such as beacons and associated instrumentation, which are generally not feasible for frequent recalibration. Alternative systems require stabilization of the electrical lengths of the transmission lines.

For example, M. Nollet et al., "Advanced VHF Interferometer Spacecraft Tracking System", Electrical Communication, Vol. 49, No. 3, 1974, discloses a system for reducing errors due to the uncertainty of the electrical lengths of the transmission lines. Bidirectional transmission of two calibration signals at different frequencies through the system is used to determine the electrical lengths of the transmission lines. However, precise calibration is impaired by indeterminable frequency-related phase shifts through the different network paths.

## Summary of the invention

According to the present invention, there is provided an internal calibration system for use with a direction finding interferometer having a plurality of receiving antenna elements, a local oscillator, one or more phase meters, and a plurality of channel receiving means associated with respective receiving antenna elements, each said channel receiving means including a radio-frequency preamplifier, a mixer connected to both said radio-frequency preamplifier and said local oscillator, and an internal intermediate-frequency amplifier connected to said mixer and one of said phase meters, characterised in that said internal calibration system comprises:

plural power dividers, each power divider having an input and first and second outputs, each power divider being associated with one of said channel receiving means, the second output of each power divider being operatively connected thereto;

a master switch operatively connected to said power dividers for directing a calibrate signal to a selected one of said power dividers;

a signal source for providing the calibrate signal to said master switch;

one or more inter-channel transmission lines each being switchably connected to the first output of each of two of said power dividers; and

secondary switching means associated with each power divider to permit the calibrate signal to bypass said power divider while passing from one of said inter-channel transmission lines to the associated channel receiving means.

The internal calibration system provides for efficient, effective and economical calibration of a direction finding interferometer.

The described internal calibration system can direct a calibrate signal alternately through at least two circuits. In operation, the source generates a calibrate signal which is directed by the master switch to a first power divider. Part of the divided calibrate signal exits a first output of the power divider and is transmitted via an inter-channel transmission line to the channel receiving means associated with a second power divider. The secondary switching means associated with this second power divider is set so that the second power divider is bypassed. The other part of the divider calibrate signal is coupled into the channel receiving means associated with the first power divider. The phases of the divided parts are compared as they reach the phase meter.

The above operation is repeated except the calibrate signal is directed to the second power divider, and the first power divider is bypassed. Again a phase difference is obtained. Comparison of the two phase differences provides the information needed to accurately calibrate the incorporating direction finding interferometer. This calibration may be performed frequently and is independent of the lengths of the various transmission lines.

## Brief description of the drawings

Fig. 1 is a block diagram of an internal calibration system for a direction finding interferometer in accordance with the present invention.

Fig. 2 is an enlarged schematic diagram of a power divider and switch assembly of the internal calibration system of Fig. 1.

Fig. 3 is an enlarged schematic diagram of an alternative embodiment of the master power divider and switch assembly of Fig. 2, adapted for use with a three-element interferometer.

Figs. 4a and 4b are block diagrams of an alternative embodiment of the internal calibration system of Fig. 1, adapted for use with a four-element interferometer.

Detailed description of the invention

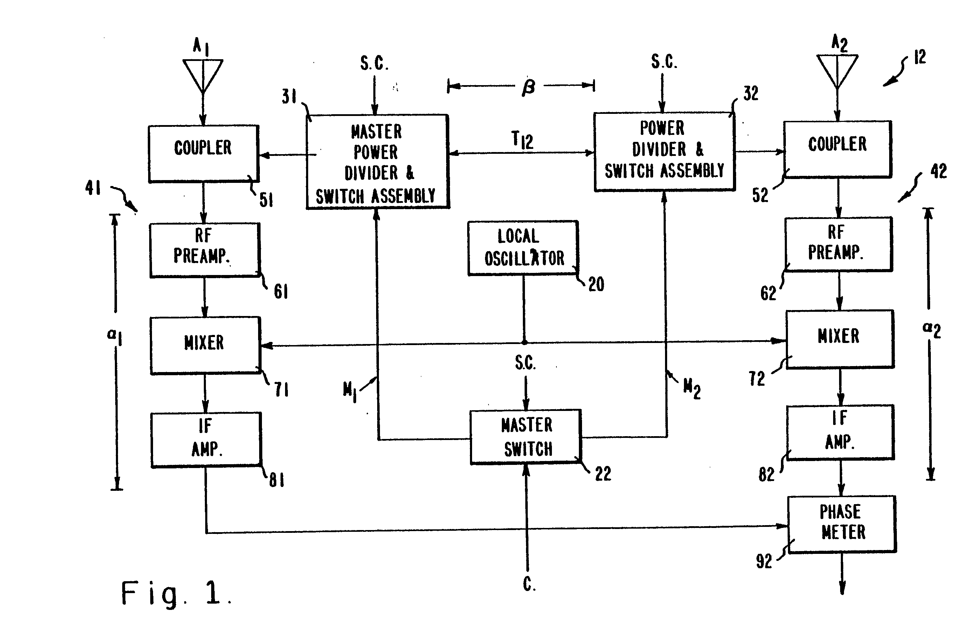

Referring to Fig. 1, there is shown a two-element direction finding interferometer, generally designated 12. Interferometer 12, in the example, comprises two antenna elements $A_1$ and $A_2$, a local oscillator 20, a master receiving channel means 41, a receiving channel means 42, a phase meter 92, master transmission lines $M_1$ and $M_2$, and inter-channel transmission line $T_{12}$.

More particularly, master receiving channel means 41 comprises a radio-frequency (RF) preamplifier 61, a mixer 71 which is connected to both RF preamplifier 61 and local oscillator 20, und an intermediate-frequency (IF) amplifier 81 which is connected to mixer 71. Receiving channel means 42 comprises a corresponding set of RF preamplifier 62, mixer 72, and IF amplifier 82. Lastly, phase meter 92 is connected to both IF amplifiers 81 and 82 of master receiving channel means 41 and receiving channel means 42, respectively.

In accordance with the present invention, the internal calibration system for interferometer 12 comprises a master switch 22, a master power divider and switch assembly 31, a power divider and switch assembly 32, transmission lines $M_1$, $M_2$, $T_{12}$, and couplers 51 and 52.

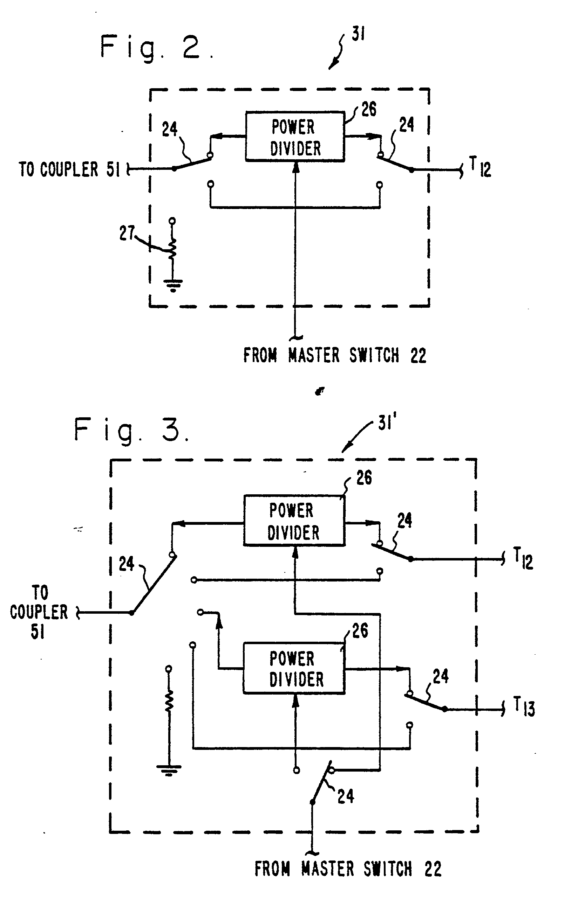

More particularly, master switch 22 is adapted to receive a switch control signal SC and a calibrate signal C. Switch control signal SC and calibrate signal C are generated by conventional means and techniques. Master power divider and switch assembly 31 is connected to master switch 22 by transmission line $M_1$ and is also adapted to receive the switch control signal SC. Similarly, power divider and switch assembly 32 is connected to both master assembly 31 via a transmission line $T_{12}$ and master switch 22 by transmission line $M_2$, and is also adapted to receive switch control signal SC. Master assembly 31 and assembly 32 are positioned in close proximity to their corresponding antenna elements $A_1$ and $A_2$, respectively. Master power divider and switch assembly 31 comprises switches 24 and a power divider 26, as shown in Fig. 2. Power divider 26 is connected to master switch 22 by transmission line $M_1$, and switchably connected to both coupler 51 and transmission line $T_{12}$. Since power divider and switch assembly 32 is identical to master assembly 31, although reverse in operation and connected to master switch 22 by transmission line $M_2$, only master assembly 31 is illustrated. Coupler 51 is connected to antenna element $A_1$, master assembly 31, and RF preamplifier 61 of master channel means 41. Similarly, coupler 52 is connected to antenna element $A_2$, assembly 32, and RF preamplifier 62 of channel receiving means 42.

In the example, couplers 51 and 52, through which calibrate signals C are coupled into receiving channel means 41 and 42, have low coupling ratios, typically in the order of −20 dB, to minimize degradation of the interferometer noise figure. Power dividers 26 of power divider and switch assemblies 31 and 32 contain attenuators as required to assure that, when calibrate signal C is routed to a given power divider and switch assembly, the divided calibrate signal C introduced into the two receiving channel means 41 and 42 will be equal. In addition, attenuators are used to assure that the signal level of calibrate signals C introduced into the receiving channel means is the same when master switch 22 is in the second position as when it is in the first position. All switches, both master switch 22 and switches 24 of assemblies 31 and 32, are controlled by suitably synchronized switch control signals SC.

More particularly, a phase shift in master receiving channel means 41, between the input of RF preamplifier 61 and the output of IF amplifier 81, is designated as $\alpha_1$. Similarly, the phase shift in receiving channel means 42 is designated as $\alpha_2$. The phase shift between assemblies 31 and 32, that is, the phase shift in inter-channel transmission line $T_{12}$, is designated as $\beta$. $\alpha_1$, $\alpha_2$, and $\beta$ are taken as phase lags in the example.

In operation, a calibrate signal C is switched alternately between two calibration transmission lines, $M_1$ and $M_2$, one of which is connected to master power divider and switch assembly 31 and the other of which is connected to power divider and switch assembly 32. The calibrate signal C is generated by conventional means and techniques. In the first mode, master switch 22 is placed in a first position such that it routes calibrate signal C to master power divider and switch assembly 31, as best shown in Fig. 2. In master assembly 31, calibrate signal C is divided into two portions. One portion of calibrate signal C is coupled into master receiving channel means 41 through coupler 51 immediately following the feed of antenna element $A_1$. The second portion of calibrate signal C is routed to power divider and switch assembly 32 via transmission line $T_{12}$. The second portion of calibrate signal C that propagates through transmission line $T_{12}$ is sufficiently larger than the first portion in order to compensate for line losses in transmission line $T_{12}$. Thus, the amplitudes of each of the two portions of calibrate signal C at either coupler 51 or coupler 52 are approximately the same. In power divider and switch assembly 32, the second portion of calibrate signal C is coupled into receiving channel means 42 through coupler 52. In the first mode, the second portion of calibrate signal C from transmission line $T_{12}$ bypasses power divider 26 of assembly 32 and switches directly into coupler 52. Each portion of calibrate signal C then propagates through its respective receiving channel means 41, 42. Lastly, phase meter 92 measures a first phase difference of the outputs of receiving channel means 41 and 42, $\phi_1 = \alpha_1 - \alpha_2 - \beta$ (modulo $2\pi$). Equality modulo $2\pi$ means that the two sides of the equation differ, if at all, by an integral multiple of $2\pi$ radians.

In the second mode, master switch 22 is placed in a second position such that it routes calibrate signal C to power divider and switch assembly 32. Similarly, assembly 32 divides calibrate signal C into two portions. One portion of calibrate signal C is coupled into receiving channel means 42 through coupler 52 immediately following the feed of antenna element $A_2$. The second portion of calibrate signal C is routed to master power divider and switch assembly 31 via the same transmission line $T_{12}$. In master assembly 31, the second portion of calibrate signal C is coupled into master receiving channel means 41 through coupler 51. Similarly, the second portion of calibrate signal C in the second mode bypasses power divider 26 of master assembly 31 and switches directly into coupler 51. In the second mode, phase meter 92 measures a second phase difference of the outputs of receiving channel means 41 and 42, $\phi_2 = \alpha_1 - \alpha_2 + \beta$ (mod $2\pi$). The operation in the second mode is thus the same as that for the first mode except that the roles of the elements associated with antenna element $A_1$ and those associated with antenna element $A_2$ are reversed.

In accordance with the present invention, the theory of operation of the internal calibration system is summarized by the phase difference equations $\phi_1$ and $\phi_2$.

$$\phi_1 + \phi_2 = (\alpha_1 - \alpha_2 - \beta) + (\alpha_1 - \alpha_2 + \beta) \quad (\text{mod } 2\pi),$$
or
$$2(\alpha_1 - \alpha_2) = \phi_1 + \phi_2 \quad (\text{mod } 2\pi).$$

Note initially that the difference of the sum of the phase shifts through power divider and switch assemblies 31 and 32 in the first mode and the second mode is generally invariant with respect to time. The value of this constant need not be known explicitly as it is accounted for in the initial external calibration. Similarly, the difference of the phase shifts of signals introduced by couplers 51 and 52 on signals received by antenna elements $A_1$ and $A_2$ is also generally invariant with respect to time. For the purpose of interferometer calibration, the only concern is the difference of the phase shifts in the two receiving channel means 41 and 42, and not with the values of the individual phase shifts in these channel means. Thus, temporal variation of the phase shifts between the outputs of power divider and switch assemblies 31 and 32 and the outputs of adjacent couplers 51 and 52 are of no consequence inasmuch as the phase shifts introduced by the elements on the calibration signals C are the same in either calibration mode one or two.

The assumption of the preceding paragraph, to the effect that certain phase differences are essentially invariant with respect to time, is valid with reasonable and careful design. Preferably, such design includes thermal control of power divider and switch assemblies 31, 32 and couplers 51, 52. Observe that, to the extent that phase changes in power divider and switch assemblies 31, 32 and couplers 51, 52 track with age and temperature, the constant phase difference condition is satisfied even in the presence of temporal phase variations in the individual units. Occasional external recalibration should still be performed to account for long-term differential phase changes in these critical units.

Ignoring phase changes whose differences can be taken to be essentially constant as described above, so that they can be accounted for by the external calibration, and tracing calibrate signal C flow through interferometer 12 for the two calibration modes, the calibration equations given previously are obtained. With the foregoing understanding concerning the phase changes whose difference can be taken to be constant, when calibrate signal C is routed to master power divider and switch assembly 31 by master switch 22, the total phase shift (lag) from the input of this assembly through RF coupler 51 and through master receiving channel means 41, to the output of IF amplifier 81 is $\alpha_1$. The phase shift from the same point, through transmission line $T_{12}$, power divider and switch assembly 32, coupler 52, and receiving channel means 42, to the output of IF amplifier 82 is $\beta + \alpha_2$. The difference of the two phase shifts is thus

$$\alpha_1 - (\beta + \alpha_2) = \alpha_1 - \alpha_2 - \beta.$$

The output of phase meter 92, $\phi_1$, for the first mode is therefore the phase difference modulo $2\pi$.

$$\phi_1 = \alpha_1 - \alpha_2 - \beta \quad (\text{mod } 2\pi).$$

In calibrate mode two, calibrate signal C is routed to power divider and switch assembly 32 by master switch 22. Under the same assumptions and conventions as previously stated, the total phase shift (lag) from the input of this assembly through RF coupler 52 and through receiving channel means 42, to the output of IF amplifier 82 is $\alpha_2$. The phase shift from the same point through transmission line $T_{12}$, master power divider and switch assembly 31, coupler 51, and master receiving channel means 41, to the output of IF amplifier 81 is $\beta + \alpha_1$. The difference of the two phase shifts is thus

$$(\beta + \alpha_1) - \alpha_2 = \alpha_1 - \alpha_2 + \beta.$$

The output of phase meter 92, $\phi_2$, for the second mode is therefore the phase difference modulo $2\pi$,

$$\phi_2 = \alpha_1 - \alpha_2 + \beta \quad (\text{mod } 2\pi).$$

From the two preceding equations,

$$2(\alpha_1 - \alpha_2) = \phi_1 + \phi_2 \quad (\text{mod } 2\pi),$$
or
$$\alpha_1 - \alpha_2 = \frac{\phi_1 + \phi_2}{2} \quad (\text{mod } \pi).$$

The phase measurements $\phi_1$ and $\phi_2$, therefore, provide the information required for internal calibration. To avoid a modulo $\pi$ ambiguity, either

the interferometer system must be designed so that the differential phase changes between receiving channel means 41 and 42 will not exceed $\pi$ radians between external calibrations or internal calibration, of the sort here described, must be performed sufficiently frequently that the modulo $\pi$ ambiguity can be resolved by tracking the temporal variation of the differential phase shift between receiving channel means 41 and 42. In the latter case, external calibration should still be performed from time to time to validate the internal calibration and to account for long-term change in the phase differences that are considered constant for the purpose of the internal calibration.

In the preferred embodiment, the details of master power divider and switch assembly 31 are shown in Fig. 2. Note that the illustrated positions of switches 24 in master assembly 31 indicate calibration mode one, with power divider 26 dividing the calibrate signal C from master switch 22. When master assembly 31 is in the normal interferometer operating mode, and not in the calibration mode, the leftmost switch 24 which connects coupler 51 is terminated by the resistor 27 to ground.

While the principle of the internal calibration system described in the foregoing paragraphs remains unchanged when applied to an interferometer with more than two antenna elements, some changes in the details of the implementation are in order. A particularly convenient way of operating an interferometer is to employ the signal from a single antenna element as the phase reference for the signals from all other antenna elements. However, the master power divider and switch assembly increases in complexity as the number of antenna elements, associated assemblies, and receiving channel means increase. For example, a three antenna element interferometer may include a master power divider and switch assembly 31', as shown in Fig. 3. The illustrated master assembly 31' is in the first mode, with switches 24 in position to permit division of calibrate signal C from master switch 22 by power divider 26. In this example, power divider 26 is switchably connected to coupler 51 and inter-channel transmission line $T_{12}$. The power divider and switch assemblies associated with antenna elements $A_2$ and $A_3$, namely assemblies 32 and 33, are the same as the configuration for the power divider and switch assembly shown in Fig. 2. The leftmost switch 24 is terminated by the resistor to ground during the normal interferometer operating mode.

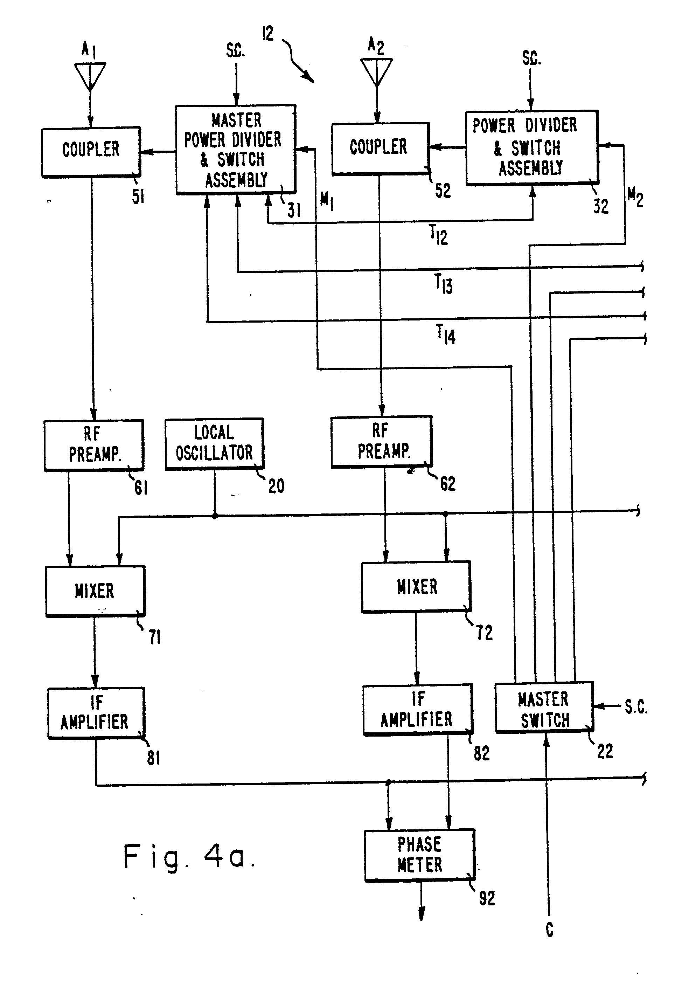

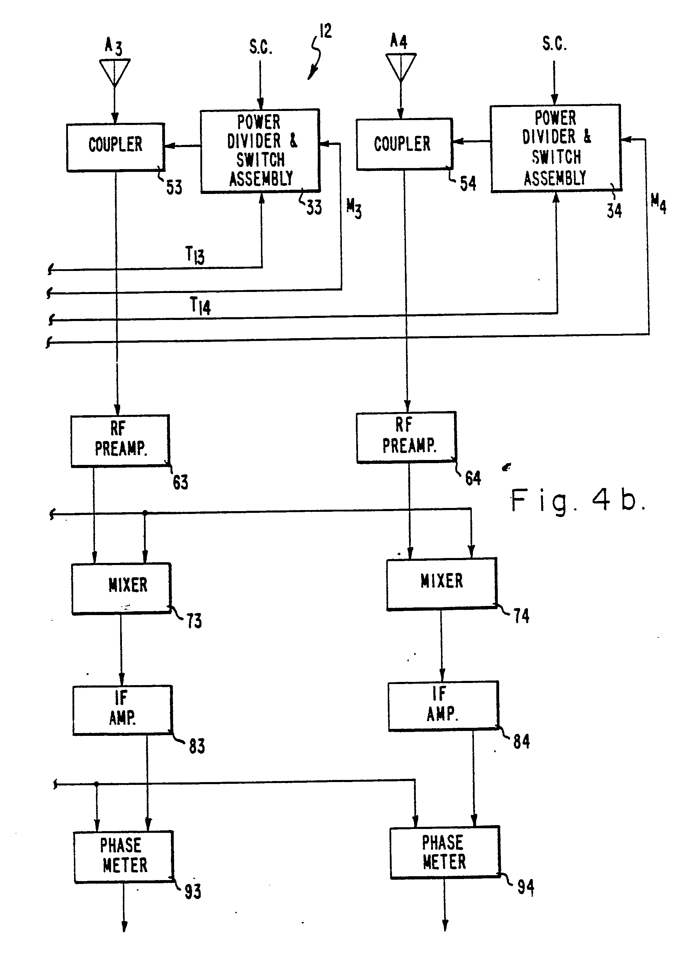

Moreover, the use of a signal from a single antenna element as the phase reference for the signals from all the other antenna elements is particularly appropriate in an interferometer comprising three or more antenna elements. Adopting this practice, the internal calibration system for a four antenna element interferometer is configured as shown in Figs. 4a and 4b, in which antenna element $A_1$ is taken as the reference antenna.

As an example, master power divider and switch assembly 31 of Fig. 4a routes calibrate signal C received from master switch 22 sequentially, when it is in calibration mode one, to any of the other three power divider and switching assemblies 32, 33, and 34 through appropriate inter-channel transmission lines $T_{12}$, $T_{13}$, $T_{14}$. Similarly, master power divider and switch assembly 31 receives calibrate signal C from any of the three inter-channel transmission lines $T_{12}$, $T_{13}$, $T_{14}$, when calibrate signal C is first routed to one of the other power divider and switch assemblies by placing master switch 22 in the other calibration modes. Power dividers 26 of the power divider and switch assemblies contain attenuators as appropriate so that the signal levels introduced into the receiving channel means are independent of both the choice of the antenna element paired with antenna element $A_1$ for calibration and the direction of flow of calibration signal C through the corresponding transmission line connecting the paired antenna element with antenna element $A_1$.

It will be apparent to those skilled in the art that various modifications may be made within the scope of the present invention. For example, when an interferometer contains n antenna elements and n receiving channel means, where n is an integer, the internal calibration system associated with the interferometer may incorporate n power divider and switch assemblies, n couplers, n transmission lines from the master switch to the master power divider switch assemblies, and n-1 transmission lines between the master power divider and switch assembly and the other power divider and switch assemblies.

## Claims

1. An internal calibration system for use with a direction finding interferometer having a plurality of receiving antenna elements ($A_1$, $A_2$, $A_3$, $A_4$), a local oscillator (20), one or more phase meters (92, 93, 94), and a plurality of channel receiving means (41, 42) associated with respective receiving antenna elements, each said channel receiving means including a radio-frequency preamplifier (61, 62, 63, 64), a mixer (71, 72, 73, 74) connected to both said radio-frequency preamplifier and said local oscillator, and an internal intermediate-frequency amplifier (81, 82, 83, 84) connected to said mixer and one of said phase meters, characterised in that said internal calibration system comprises:

plural power dividers (31, 32, 33, 34), each power divider having an input and first and second outputs, each power divider being associated with one of said channel receiving means, the second output of each power divider being operatively connected thereto;

a master switch (22) operatively connected to said power dividers for directing a calibrate signal (c) to a selected one of said power dividers;

a signal source for providing the calibrate signal (c) to said master switch;

one or more inter-channel transmission lines ($T_{12}$, $T_{13}$, $T_{14}$) each being switchably connected to the first output of each of two of said power dividers; and

secondary switching means (24) associated with each power divider to permit the calibrate signal to bypass said power divider while passing from one of said inter-channel transmission lines ($T_{12}$, $T_{13}$, $T_{14}$) to the associated channel receiving means.

2. A system according to Claim 1, further comprising plural master transmission lines ($M_1$, $M_2$, $M_3$, $M_4$), each adapted for transmitting the calibrate signal from said master switch to said power dividers.

3. A system according to Claim 2, further comprising plural couplers (51, 52, 53, 54) each coupler being associated with a channel receiving means and being adapted for coupling the calibrate signal from the second output of one of said power dividers into the associated one of said channel receiving means between the included radio-frequency preamplifier and the associated antenna element.

4. The internal calibration system of Claim 3, wherein

said interferometer comprises two of said receiving antenna elements ($A_1$, $A_2$) a master receiving channel means (41), one other of said receiving channel means (42), and one of said phase meters (92), and

said system comprises a master power divider and switch assembly (31), a single secondary power divider and switch assembly (32), two of said master transmission lines ($M_1$, $M_2$) connecting said master switch and said master and secondary power divider and switch assemblies, one of said inter-channel transmission lines ($T_{12}$) between said master power divider and switch assembly and said secondary divider and switch assembly, and two of said couplers (51, 52), each of which corresponds to one of said channel means.

5. The internal calibration system of Claim 3, wherein

said interferometer comprises four of said receiving antenna elements ($A_1$, $A_2$, $A_3$, $A_4$), a master receiving channel means (41), three of said receiving channel means (42, 43, 44), and three of said phase meters (92, 93, 94), and

said system comprises a master power divider and switch assembly (31), three of said secondary power divider and switch assemblies (32, 33, 34), four of said transmission lines ($M_1$, $M_2$, $M_3$, $M_4$) connecting said master switch and said master and secondary power divider and switch assemblies, three of said transmission lines ($T_{12}$, $T_{13}$, $T_{14}$) between said master power divider and switch assembly and said secondary divider and switch assemblies, and four of said couplers (51, 52, 53, 54) each of which corresponds to one of said channel means.

6. The internal calibration system of any of the preceding claims, wherein said direction finding interferometer is a long-baseline type.

## Patentansprüche

1. Internes Eichsystem zum Einsatz bei einem richtungssuchenden Interferometer mit einer Mehrzahl von Empfangsantennenelementen ($A_1$, $A_2$, $A_3$, $A_4$), einem Empfangsoszillator (20), einem oder mehreren Phasenmessern (92, 93, 94), und einer Mehrzahl von entsprechenden Empfangsantennenelementen zugeordneten Kanalempfangsmitteln (41, 42), wobei jedes besagte Kanalempfangsmittel einen Hochfrequenzvorverstärker (61, 62, 63, 64), eine mit dem besagten Hochfrequenzvorverstärker sowie dem besagten Empfangsoszillator verbundene Mischstufe (71, 72, 73, 74), und einen mit der besagten Mischstufe und einem der besagten Phasenmesser verbundenen internen Zwischenfrequenzverstärker (81, 82, 83, 84) umfaßt, dadurch gekennzeichnet, daß das besagte interne Eichsystem umfaßt:

mehrfache Leistungsteiler (31, 32, 33, 34), wobei jeder Leistungsteiler einen Eingang und erste und zweite Ausgänge besitzt, wobei jeder Leistungsteiler einem der besagten Kanalempfangsmittel zugeordnet ist und der zweite Ausgang jedes Leistungsteilers betriebsmäßig damit verbunden ist;

einen betribesmäßig mit den besagten Leistungsteilern zum Richten eines Eichsignals (c) zu einem ausgewählten der besagten Leistungsteiler verbundenen Hauptschalter (22);

eine Signalquelle zum Zuführen des Eichsignals (c) zum besagten Hauptschalter;

eine oder mehrere Zwischenkanalübertragungsleitungen ($T_{12}$, $T_{13}$, $T_{14}$), die jeweils schaltbar mit dem ersten Ausgang jeweils zwei der besagten Leistungsteiler verbunden sind; und

jedem Leistungsteiler zugeordnete Nebenschaltmittel (24), damit das Eichsignal beim Durchlaufen von einer der besagten Zwischenkanalübertragungsleitungen ($T_{12}$, $T_{13}$, $T_{14}$) zu den zugeordneten Kanalempfangsmitteln den besagten Leistungsteiler überbrücken kann.

2. System nach Anspruch 1, weiterhin gekennzeichnet durch mehrfache Hauptübertragungsleitungen ($M_1$, $M_2$, $M_3$, $M_4$), die jeweils zur Übertragung des Eichsignals vom besagten Hauptschalter zu besagten Leistungsteilern fähig sind.

3. System nach Anspruch 2, weiterhin gekennzeichnet durch mehrfache Koppler (51, 52, 53, 54), wobei jeder Koppler einem Kanalempfangsmittel zugeordnet und zum Einkoppeln des Eichsignals vom zweiten Ausgang eines der besagten Leistungsteiler in den zugeordneten der besagten Kanalempfangsmittel zwischen dem enthaltenen Hochfrequenzvorverstärker und dem zugeordneten Antennenelement fähig ist.

4. Internes Eichsystem nach Anspruch 3, dadurch gekennzeichnet, daß

das besagte Interferometer zwei der besagten Empfangsantennenelemente ($A_1$, $A_2$), ein Hauptempfangskanalmittel (41, ein weiteres der besagten Empfangskanalmittel (42) und einen der besagten Phasenmesser (92 umfaßt, und

das besagte System einen Hauptleistungsteiler und Schalterbaugruppe (31), einen einzelnen Nebenleistungsteiler und Schalterbaugruppe (32), zwei der besagten den besagten Hauptschalter und besagte Haupt- und Nebenleistungsteiler und Schalterbaugruppe verbindende Hauptübertragungsleitungen ($M_1$, $M_2$), eine der besagten Zwischenkanalübertragungsleitungen ($T_{12}$), zwischen dem besagten Hauptleistungsteiler und Schalterbaugruppe und den besagten Nebenteiler und Schalterbaugruppe, und zwei der besagten Koppler (51, 52), die jeweils einem der besagten Kanalmittel entsprechen, umfaßt.

5. Internes Eichsystem nach Anspruch 3, dadurch gekennzeichnet, daß

das besagte Interferometer vier der besagten Empfangsantennenelemente ($A_1$, $A_2$, $A_3$, $A_4$), ein Hauptempfangskanalmittel (41), drei der besagten Empfangskanalmittel (42, 43, 44) und drei der besagten Phasenmesser (92, 93, 94) umfaßt, und

das besagte System einen Hauptleistungsteiler und Schalterbaugruppe (31), drei der besagten Nebenleistungsteiler und Schalterbaugruppen (32, 33, 34), vier der besagten den besagten Hauptschalter und besagte Haupt- und Nebenleistungsteiler und Schalterbaugruppen verbindende Übertragungsleitungen ($M_1$, $M_2$, $M_3$, $M_4$), drei der besagten Übertragungsleitungen ($T_{12}$, $T_{13}$, $T_{14}$) zwischen besagtem Hauptleistungsteiler und Schalterbaugruppe und besagtem Nebenteiler und Schalterbaugruppen, und vier der besagten Koppler (51, 52, 53, 54), die jeweils einem der besagten Kanalmittel entsprechen, umfaßt.

6. Internes Eichsystem nach einem der vorhergehenden Ansprüche, dadurch gekennzeichnet, daß da besagte richtungssuchende Interferometer eine Ausführung mit langer Basislinie ist.

**Revendications**

1. Système d'étalonnage interne à utiliser avec un interféromètre de localisation comportant plusieurs éléments d'antenne de réception ($A_1$, $A_2$, $A_3$, $A_4$), un oscillateur local (20), un ou plusieurs phasemètres (92, 93, 94), et plusieurs récepteurs de canaux (41, 42) associés aux éléments d'antenne respectifs, chaque récepteur de canal comprenant un préamplificateur radiofréquence (61, 62, 63, 64), un mélangeur (71, 72, 73, 74) connecté au préamplificateur radiofréquence et à l'oscillateur local, et un amplificateur FI interne (81, 82, 83, 84) connecté au mélangeur et à un des phasemètres, le dit système d'étalonnage interne étant caractérisé en ce qu'il comprend:

plusieurs diviseurs de puissance (31, 32, 33, 34), chaque diviseur de puissance comportant une entrée et des première et seconde sorties et étant associé à un des récepteurs de canaux, la seconde sortie de chaque diviseur de puissance y étant activement connectée; .

un commutateur principal (22) connecté activement aux diviseurs de puissance pour diriger un signal d'étalonnage (c) vers un diviseur de puissance sélectionné;

une source de signaux pour fournir le signal d'étalonnage (c) au commutateur principal;

une ou plusieurs lignes de transmission entre canaux ($T_{12}$, $T_{13}$, $T_{14}$) connectées chacune de façon commutable à la première sortie de chacun de deux diviseurs de puissance, et

un moyen de commutation secondaire (24) associé à chaque diviseur de puissance pour permettre au signal d'étalonnage de contourner le diviseur de puissance tout en passant de l'une des lignes de transmission entre canaux ($T_{12}$, $T_{13}$, $T_{14}$, au récepteur de canal associé.

2. Système suivant la revendication 1, comprenant, en outre, plusieurs lignes de transmission principales ($M_1$, $M_2$, $M_3$, $M_4$) propres chacune à transmettre le signal d'étalonnage du commutateur principal aux diviseurs de puissance.

3. Système suivant la revendication 2, comprenant, en outre, plusieurs coupleurs (51, 52, 53, 54), chaque coupleur étant associé à un récepteur de canal et étant à même de coupler le signal d'étalonnage de la seconde sortie d'un des diviseurs de puissance au récepteur de canal associé entre le préamplificateur radiofréquence inclus et l'élément d'antenne associé.

4. Système d'étalonnage interne suivant la revendication 3, dans lequel:

l'interféromètre comprend deux des éléments d'antenne de réception ($A_1$, $A_2$), un canal de réception principal (41), un autre des canaux de réception (42) et un des phasemètres (92), et

le système comprend un ensemble de diviseur de puissance principal à commutateur (31), un ensemble unique de diviseur de puissance secondaire à commutateur (32), deux des lignes de transmission principales ($M_1$, $M_2$) connectant le commutateur principal et les ensembles de diviseurs de puissance principal et secondaire à commutateurs, une des lignes de transmission entre canaux ($T_{12}$) entre l'ensemble de diviseur de puissance principal à commutateur et l'ensemble de diviseur de puissance secondaire à commutateur, et deux des coupleurs (51, 52) correspondant chacun à un des canaux.

5. Système d'étalonnage interne suivant la revendication 3, dans lequel:

l'interféromètre comprend quatre des éléments d'antenne de réception ($A_1$, $A_2$, $A_3$, $A_4$), un canal de réception principal (41), trois des canaux de réception (42, 43, 44), et trois des phasemètres (92, 93, 94), et

le système comprend un ensemble de diviseur de puissance principal à commutateur (31), trois des ensembles de diviseurs de puissance secondaires à commutateurs (32, 33, 34), quatre des lignes de transmission ($M_1$, $M_2$, $M_3$, $M_4$) connectant le commutateur principal et les ensembles de diviseurs de puissance principal et secondaire à commutateurs, trois des lignes de transmission ($T_{12}$, $T_{13}$, $T_{14}$) entre l'ensemble de diviseur de puissance principal à commutateur et les ensembles de diviseurs de puissance secondaires à commutateurs, et quatre des coupleurs (51, 52, 53, 54) correspondant chacun à un des canaux.

6. Système d'étalonnage interne suivant l'une quelconque des revendications précédentes, dans lequel l'interféromètre de localisation est d'un type à longue base.

Fig. 1.

EP 0 152 482 B1

Fig. 2.

FROM MASTER SWITCH 22

Fig. 3.

FROM MASTER SWITCH 22

Fig. 4a.

Fig. 4b.